# EUROPÄISCHE PATENTANMELDUNG

(11) **EP 3 364 265 A1**
(43) Veröffentlichungstag der Anmeldung: **22.08.2018**
(21) Anmeldenummer: 18401017.1
(22) Anmeldetag: 20.02.2018
(51) Int. Cl.: G05D 1/02, A01B 69/00

(54) **VERFAHREN ZUM STEUERN EINES VON EINER ZUGMASCHINE GEZOGENEN LANDWIRTSCHAFTLICHEN ARBEITSGERÄTS**

(30) Priorität: 21.02.2017 DE 102017103525
(71) Anmelder: Amazonen-Werke H. Dreyer GmbH & Co. KG, 49205 Hasbergen (DE)
(72) Erfinder: Kötter, Heiner, 49086 Osnabrück (DE); Heer, Jochen, 49074 Osnabrück (DE); Röhe, Carsten, 49078 Osnabrück (DE)

(57) **Zusammenfassung**

Die Erfindung betrifft ein Verfahren zum Steuern eines von einer Zugmaschine (10) gezogenen landwirtschaftlichen Arbeitsgeräts (12), mit den Schritten: Erfassen von Positionsdaten der Zugmaschine (10) unter Verwendung eines Satellitensystems, Bereitstellen der Positionsdaten der Zugmaschine (10) zum Abruf durch das landwirtschaftliche Arbeitsgerät (12), Abrufen der Positionsdaten der Zugmaschine (10) durch das landwirtschaftliche Arbeitsgerät (12) und selbsttätiges Steuern des landwirtschaftlichen Arbeitsgeräts (12) auf Grundlage der abgerufenen Positionsdaten der Zugmaschine (10).

## Beschreibung

Die Erfindung betrifft ein Verfahren zum Steuern eines von einer Zugmaschine gezogenen landwirtschaftlichen Arbeitsgeräts nach dem Oberbegriff des Patentanspruchs 1, eine Steuerungseinrichtung für ein landwirtschaftliches Arbeitsgerät nach dem Oberbegriff des Patentanspruchs 9 und ein landwirtschaftliches Arbeitsgerät nach dem Oberbegriff des Patentanspruchs 11.

Landwirtschaftliche Arbeitsgeräte werden häufig von Zugmaschinen, wie etwa Traktoren, gezogen. Gezogene landwirtschaftliche Arbeitsgeräte können beispielsweise Düngerstreuer oder Pflanzenschutzspritzen sein.

Insbesondere bei Kurvenfahren auf einer zu bearbeitenden landwirtschaftlichen Fläche besteht die Gefahr, dass Nutzpflanzen von den Rädern der Zugmaschine und/oder von den Rädern des gezogenen landwirtschaftlichen Arbeitsgeräts überfahren und somit beschädigt oder sogar zerstört werden.

Um eine Beschädigung von Nutzpflanzen zu verhindern, wurden sogenannte Nachlaufsteuerungen entwickelt, welche bewirken, dass die Räder des gezogenen landwirtschaftlichen Arbeitsgeräts in der Spur der Zugmaschine laufen.

Aus der Druckschrift DE 603 19 896 T2 ist beispielsweise eine Nachlaufsteuerung bekannt, bei welcher die Fahrtrichtung der Zugmaschine erfasst und mittels einer Steuereinheit des landwirtschaftlichen Arbeitsgeräts aus der Fahrtrichtung der Zugmaschine eine geeignete Korrekturgröße bestimmt wird.

Ferner ist es aus der Erntetechnik bekannt, Positionsdaten von Maschinen unter Verwendung eines Satellitensystems zu erfassen und diese Positionsdaten einer weiteren Maschine zum Abruf bereitzustellen. Die Druckschrift DE 10 2008 015 277 A1 beschreibt eine entsprechende Steuerung, welche eine Parallelfahrt einer selbstfahrenden Erntemaschine und eines Transportfahrzeugs erlaubt.

Bekannte auf Satellitendaten basierende Steuerungen sind jedoch nicht für die Nachlaufsteuerung von gezogenen landwirtschaftlichen Arbeitsgeräten einsetzbar. Die bekannten Nachlaufsteuerungen sind entweder äußert aufwändig oder nicht hinreichend präzise, um den stetig wachsenden Anforderungen in der Landwirtschaft gerecht zu werden.

Die der Erfindung zugrunde liegende Aufgabe besteht somit darin, die Nachlaufsteuerung eines gezogenen landwirtschaftlichen Arbeitsgeräts zu vereinfachen und/oder derart zu verbessern, dass die Beschädigung von Nutzpflanzen während der Kurvenfahrt eines landwirtschaftlichen Zuggespanns verringert wird.

Die Aufgabe wird gelöst durch ein Verfahren der eingangs genannten Art, wobei die Positionsdaten der Zugmaschine durch das landwirtschaftliche Arbeitsgerät abgerufen werden und das landwirtschaftliche Arbeitsgeräts auf Grundlage der abgerufenen Positionsdaten der Zugmaschine selbsttätig gesteuert wird.

Die Erfindung macht sich die Erkenntnis zunutze, dass aus den Positionsdaten der Zugmaschine Informationen zu der Bewegung der Zugmaschine abgeleitet werden können. Diese Bewegungsinformationen können zur Steuerung des gezogenen landwirtschaftlichen Arbeitsgeräts eingesetzt werden, beispielsweise um eine präzise Nachlaufsteuerung umzusetzen, bei welcher die Räder des gezogenen landwirtschaftlichen Arbeitsgeräts exakt in der Spur der Zugmaschine laufen. Die zum selbsttätigen Steuern des landwirtschaftlichen Arbeitsgeräts notwendigen Positionsdaten der Zugmaschine können nach der Verwendung gelöscht oder auf einem Speicher des landwirtschaftlichen Arbeitsgeräts gespeichert werden. Wenn die Positionsdaten auf einem Speicher des landwirtschaftlichen Arbeitsgeräts gespeichert werden, stehen die gespeicherten Positionsdaten bei einem späteren Arbeitsschritt beispielsweise zur Steuerung des gleichen Arbeitsgeräts und/oder eines anderen Arbeitsgeräts zur Verfügung. Zudem kann die Bewegungscharakteristik der Zugmaschine über einen längeren Zeitraum abgeleitet werden. Durch die Berücksichtigung einer solchen Bewegungscharakteristik der Zugmaschine kann die Steuerung des gezogenen landwirtschaftlichen Arbeitsgeräts nochmals verbessert werden. Ferner können die gespeicherten Positionsdaten von Technikern zu Diagnosezwecken abgerufen und ausgewertet werden.
In einer bevorzugten Ausführungsform des erfindungsgemäßen Verfahrens erfolgt das Erfassen der Positionsdaten der Zugmaschine durch eine Erfassungseinrichtung der Zugmaschine. Alternativ kann das Erfassen der Positionsdaten der Zugmaschine durch eine externe Erfassungseinrichtung erfolgen, welche signalleitend mit der Steuerungselektronik der Zugmaschine verbunden ist und der Zugmaschine die erfassten Positionsdaten bereitstellt. Die Erfassungseinrichtung weist vorzugsweise ein satellitengestütztes Navigations-Modul, beispielsweise GPS(Global Positioning System)-Modul, auf. Vorzugsweise ist das Navigations-Modul dazu eingerichtet, mit einem oder mehreren der folgenden Satellitensysteme oder einem Ergänzungssystem dieser Satellitensysteme zu kommunizieren: NAVSTAR GPS, GLONASS, Galileo, Beidou.

Die Navigation der Zugmaschine kann zusätzlich mithilfe von hinterlegten Positions- und/oder Planungsdaten erfolgen. Diese werden mit den erfassten Positionsdaten abgeglichen.

In einer Weiterbildung des erfindungsgemäßen Verfahrens wird die Geschwindigkeit der Zugmaschine erfasst. Alternativ oder zusätzlich wird die Geschwindigkeit des landwirtschaftlichen Arbeitsgeräts erfasst. Das Erfassen der Geschwindigkeit der Zugmaschine kann durch die Zugmaschine oder das landwirtschaftliche Arbeitsgerät erfolgen. Wenn das Erfassen der Geschwindigkeit der Zugmaschine durch die Zugmaschine selbst erfolgt, kann dies insbesondere auf Grundlage der Positionsdaten der Zugmaschine erfolgen. Alternativ kann die Geschwindigkeit der Zugmaschine auch durch einen oder mehrere Sensoren, wie Wegsensoren, Geschwindigkeitssensoren und/oder Beschleunigungssensoren, der Zugmaschine erfasst werden. Das Erfassen der Geschwindigkeit des landwirtschaftlichen Arbeitsgeräts kann durch die Zugmaschine oder das landwirtschaftliche Arbeitsgerät erfolgen. Wenn das Erfassen der Geschwindigkeit des landwirtschaftlichen Arbeitsgeräts durch das landwirtschaftliche Arbeitsgerät selbst erfolgt, kann die Geschwindigkeit des landwirtschaftlichen Arbeitsgeräts durch einen oder mehrere Sensoren, wie Wegsensoren, Geschwindigkeitssensoren und/oder Beschleunigungssensoren, des landwirtschaftlichen Arbeitsgeräts erfasst werden.

In einer vorteilhaften Weiterbildung des erfindungsgemäßen Verfahrens werden technische Informationen zu der Zugmaschine abgerufen. Alternativ oder zusätzlich werden technische Informationen zu dem landwirtschaftlichen Arbeitsgerät abgerufen. Die technischen Informationen zu der Zugmaschine werden vorzugsweise durch das landwirtschaftliche Arbeitsgerät von der Zugmaschine oder einer Datenbank abgerufen. Die Datenbank kann eine externe Datenbank oder eine interne Datenbank, welche auf einem Speicher des landwirtschaftlichen Arbeitsgeräts oder der Zugmaschine hinterlegt ist, sein. Die externe Datenbank kann durch das landwirtschaftliche Arbeitsgerät abgerufen werden. Die technischen Informationen zu dem landwirtschaftlichen Arbeitsgerät werden vorzugsweise durch das landwirtschaftliche Arbeitsgerät von einer internen Datenbank, welche auf einem Speicher des landwirtschaftlichen Arbeitsgeräts hinterlegt ist, abgerufen. Die interne Datenbank kann beispielsweise von dem Hersteller des landwirtschaftlichen Arbeitsgeräts erstellt worden sein und/oder ist durch den Hersteller des landwirtschaftlichen Arbeitsgeräts, einem Drittanbieter und/oder manuell über eine Eingabeeinrichtung aktualisierbar. Die technischen Informationen zu der Zugmaschine können die Abmessungen der Zugmaschine und/oder die Position des Navigations-Moduls innerhalb der Zugmaschine umfassen. Die Abmessungen der Zugmaschine können beispielsweise die Radpositionen, die Spurweite, den Radstand und/oder Informationen über die Ausgestaltung der Kupplungseinrichtung der Zugmaschine umfassen. Die technischen Informationen zu dem landwirtschaftlichen Arbeitsgerät können die Abmessungen des landwirtschaftlichen Arbeitsgeräts umfassen. Die Abmessungen des landwirtschaftlichen Arbeitsgeräts können beispielsweise die Radpositionen, die Spurweite, den Radstand und/oder Informationen über die Ausgestaltung der Kupplungseinrichtung des landwirtschaftlichen Arbeitsgeräts umfassen.

Das erfindungsgemäße Verfahren wird ferner dadurch vorteilhaft weitergebildet, dass das selbsttätige Steuern des landwirtschaftlichen Arbeitsgeräts auf Grundlage der abgerufenen Positionsdaten der Zugmaschine das Erzeugen eines Steuerungssignals auf Grundlage der Positionsdaten der Zugmaschine umfasst. Das Erzeugen des Steuerungssignals auf Grundlage der Positionsdaten der Zugmaschine erfolgt vorzugsweise unter Berücksichtigung der Geschwindigkeit der Zugmaschine, der Geschwindigkeit des landwirtschaftlichen Arbeitsgeräts, technischen Informationen zu der Zugmaschine und/oder technischen Informationen zu dem landwirtschaftlichen Arbeitsgerät. Das Steuerungssignal kann beispielsweise eine Zustandsänderung einer Lenkeinrichtung des landwirtschaftlichen Arbeitsgeräts verursachen. Insbesondere kann das Steuerungssignal eine Betätigung eines oder mehrerer Lenkaktuatoren der Lenkeinrichtung verursachen. Der eine oder die mehreren Lenkaktuatoren der Lenkeinrichtung können beispielsweise pneumatisch, hydraulisch oder elektrisch angetrieben sein.

In einer anderen Ausführungsform des erfindungsgemäßen Verfahrens umfasst das Bereitstellen der Positionsdaten der Zugmaschine zum Abruf durch das landwirtschaftliche Arbeitsgerät das Bereitstellen der Positionsdaten der Zugmaschine für eine Bus-Schnittstelle der Zugmaschine. Vorzugsweise ist die Bus-Schnittstelle eine ISOBUS-Schnittstelle. Das Bereitstellen der Positionsdaten der Zugmaschine für eine Bus-Schnittstelle der Zugmaschine erlaubt einerseits ein unkompliziertes Abrufen der Positionsdaten durch Drittgeräte, wie dem gezogenen landwirtschaftlichen Arbeitsgerät, und andererseits ein Abrufen der Positionsdaten durch weitere interne Systeme der Zugmaschine, wie etwa weiteren Assistenzsystemen, welche den Maschinenführer bei dem auszuführenden Arbeitsvorgang unterstützen.

Bevorzugt ist außerdem ein erfindungsgemäßes Verfahren, bei welchem das Abrufen der Positionsdaten der Zugmaschine durch das landwirtschaftliche Arbeitsgerät kabelgebunden oder kabellos erfolgt. Wenn das Abrufen der Positionsdaten der Zugmaschine durch das landwirtschaftliche Arbeitsgerät kabellos erfolgt, weisen die Zugmaschine und das landwirtschaftliche Arbeitsgerät jeweils ein Kommunikationsmodul auf, welches dazu eingerichtet ist, elektromagentische Wellen zu senden und/oder zu empfangen. Beispielsweise erfolgt die Übertragung der Positionsdaten und/oder der technischen Informationen von der Zugmaschine auf das landwirtschaftliche Arbeitsgerät durch die Verwendung von Funktechnik, insbesondere über eine Ad-hoc-Funkverbindung. Insbesondere kann zur Übertragung der Positionsdaten und/oder der technischen Informationen von der Zugmaschine auf das landwirtschaftliche Arbeitsgerät eine Bluetooth-Verbindung genutzt werden. Alternativ kann die Übertragung der Positionsdaten und/oder der technischen Informationen unter Nutzung eines Mobilfunknetzes erfolgen.

In einer vorteilhaften Ausgestaltung des erfindungsgemäßen Verfahrens umfasst das selbsttätige Steuern des landwirtschaftlichen Arbeitsgeräts auf Grundlage der abgerufenen Positionsdaten der Zugmaschine das selbsttätige Steuern einer Lenkeinrichtung des landwirtschaftlichen Arbeitsgeräts, insbesondere derart, dass das landwirtschaftliche Arbeitsgerät in der Spur der Zugmaschine fährt. Auf diese Weise wird eine präzise Nachlaufsteuerung für das landwirtschaftliche Arbeitsgerät umgesetzt, durch welche eine unnötige Beschädigung und/oder Zerstörung von Nutzpflanzen vermieden wird.

Die der Erfindung zugrunde liegende Aufgabe wird ferner durch eine Steuerungseinrichtung der eingangs genannten Art gelöst, wobei das Kommunikationsmodul dazu eingerichtet ist, Positionsdaten der Zugmaschine von der Zugmaschine abzurufen, und die Recheneinheit dazu eingerichtet ist, auf Grundlage der abgerufenen Positionsdaten der Zugmaschine ein Steuerungssignal für das landwirtschaftliche Arbeitsgerät zu erzeugen. Hinsichtlich der Vorteile und Modifikationen der erfindungsgemäßen Steuerungseinrichtung wird auf die Vorteile und Modifikationen des erfindungsgemäßen Verfahrens verwiesen.

In einer besonders bevorzugten Ausführungsform ist die erfindungsgemäße Steuerungseinrichtung dazu eingerichtet, in einem Verfahren zum Steuern eines von einer Zugmaschine gezogenen landwirtschaftlichen Arbeitsgeräts nach einer der vorstehend beschriebenen Ausführungsformen verwendet zu werden.

Die der Erfindung zugrunde liegende Aufgabe wird darüber hinaus mit einem landwirtschaftlichen Arbeitsgerät der eingangs genannten Art gelöst, wobei die Steuerungseinrichtung des landwirtschaftlichen Arbeitsgeräts nach einer der vorstehend beschriebenen Ausführungsformen ausgebildet ist. Hinsichtlich der Vorteile und Modifikationen des erfindungsgemäßen landwirtschaftlichen Arbeitsgeräts wird auf die Vorteile und Modifikationen der erfindungsgemäßen Steuerungseinrichtung verwiesen. Das landwirtschaftliche Arbeitsgerät kann beispielsweise ein Düngerstreuer oder eine Pflanzenschutzspritze sein.

Weitere Einzelheiten der Erfindung sind der Figurenbeschreibung und den Zeichnungen zu entnehmen. Es zeigen
- Fig. 1: ein schematisches Ausführungsbeispiel des erfindungsgemäßen landwirtschaftlichen Arbeitsgeräts in einer Draufsicht; und
- Fig. 2: das in der Fig. 1 dargestellte landwirtschaftliche Arbeitsgerät in einer schematischen Darstellung.

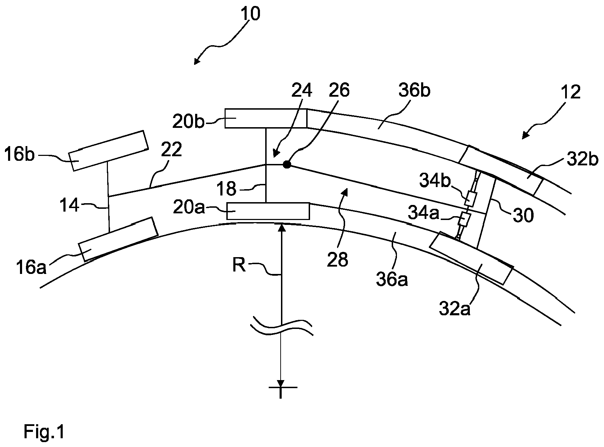

Die Fig. 1 zeigt eine als Traktor ausgebildete Zugmaschine 10, welche sich in einer Kurvenfahrt befindet und ein als Pflanzenschutzspritze ausgebildetes landwirtschaftliches Arbeitsgerät 12 zieht.

Die Zugmaschine 10 weist eine Vorderachse 14 und eine Hinterachse 18 auf. An der Vorderachse 14 sind zwei Vorderräder 16a, 16b angeordnet. An der Hinterachse 18 sind zwei Hinterräder 20a, 20b angeordnet. Die Spurbreite der Vorderräder 16a, 16b und die Spurbreite der Hinterräder 20a, 20b stimmen überein.

Die Vorderachse 14 und die Hinterachse 18 sind mit dem Maschinenrahmen 22 verbunden. Ferner weist die Zugmaschine 10 eine Kupplungseinrichtung 24 auf, welche einen Kuppelpunkt 26 definiert, an welchem die Kupplungseinrichtung 28 des landwirtschaftlichen Arbeitsgeräts 12 um eine im Wesentlichen vertikale Schwenkachse schwenkbar angelenkt ist.

Das landwirtschaftliche Arbeitsgerät 12 weist eine Achse 30 auf, an welcher Räder 32a, 32b angeordnet sind. Die Räder 32a, 32b sind mit einer Lenkeinrichtung 34a, 34b des landwirtschaftlichen Arbeitsgeräts 12 verbunden, über welche die Räder 32a, 32b jeweils um eine im Wesentlichen vertikal verlaufende Drehachse gedreht werden können.

Die von der Zugmaschine 10 und dem landwirtschaftlichen Arbeitsgerät 12 gefahrene Kurve kann zumindest abschnittsweise kreisförmig angenähert werden und weist somit zumindest abschnittsweise im Bereich der kurveninneren Räder 20a, 32a einen Radius R auf. Die Räder 32a, 32b laufen in den Spuren 36a, 36b der Hinterräder 20a, 20b der Zugmaschine 10.

Die Zugmaschine 10 erfasst unter Verwendung eines satellitengestützen Navigationssystems Positionsdaten der Zugmaschine 10 und stellt diese zum Abruf durch das landwirtschaftliche Arbeitsgerät 12 bereit. Das landwirtschaftliche Arbeitsgerät 12 ruft die Positionsdaten der Zugmaschine 10 ab und steuert auf Grundlage der abgerufenen Positionsdaten der Zugmaschine 10 selbsttätig die eigene Lenkeinrichtung 34a, 34b.

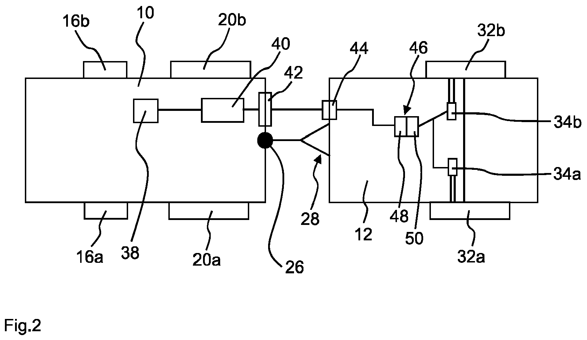

Die Fig. 2 zeigt, dass die Zugmaschine 10 eine Erfassungseinrichtung 38, eine Steuerungseinheit 40 und eine Bus-Schnittstelle 42 aufweist, wobei die Erfassungseinrichtung 38, die Steuerungseinheit 40 und die Bus-Schnittstelle 42 signalleitend miteinander verbunden sind.

Die Erfassungseinrichtung 38 weist ein Navigations-Modul auf und ist dazu eingerichtet, Positionsdaten der Zugmaschine 10 satellitengestützt zu erfassen.

Die erfassten Positionsdaten werden dann der Steuerungseinheit 40 bereitgestellt. Die Steuerungseinheit 40 kann die Positionsdaten entweder unverändert oder bearbeitet der Bus-Schnittstelle 42 bereitstellen. Beispielsweise kann die Steuerungseinheit 40 zusätzlich zu den Positionsdaten weitere Bewegungsinformationen, wie die aktuelle Geschwindigkeit oder Beschleunigung und/oder technische Informationen zu der Zugmaschine 10, der Bus-Schnittstelle 42 bereitstellen. Die eigene Geschwindigkeit oder Beschleunigung kann die Zugmaschine 10 beispielsweise aus den Positionsdaten ableiten oder durch einen oder mehrere geeignete Sensoren, wie Geschwindigkeitssensoren und/oder Beschleunigungssensoren, erfassen.

Das landwirtschaftliche Arbeitsgerät 12 ruft die über die Bus-Schnittstelle 42 der Zugmaschine 10 bereitgestellten Positionsdaten und Informationen über die eigene Bus-Schnittstelle 44 ab. Die Bus-Schnittstellen 42, 44 sind als ISOBUS-Schnittstellen ausgebildet, sodass das Abrufen der Positionsdaten und Informationen durch das landwirtschaftliche Arbeitsgerät 12 kabelgebunden erfolgt. In einer alternativen Ausführungsform kann das Abrufen der Positionsdaten und Informationen durch das landwirtschaftliche Arbeitsgerät 12 auch kabellos erfolgen. Die Bus-Schnittstelle 44 des landwirtschaftlichen Arbeitsgeräts 12 ist mit einer Steuerungseinrichtung 46 des landwirtschaftlichen Arbeitsgeräts 12 signalleitend verbunden.

Die Steuerungseinrichtung 46 weist ein Kommunikationsmodul 48 und eine signalleitend mit dem Kommunikationsmodul 48 verbundene Recheneinheit 50 auf. Das Kommunikationsmodul 48 ist dazu eingerichtet, die Positionsdaten der Zugmaschine 10 und die weiteren von der Zugmaschine 10 bereitgestellten Information über die Bus-Schnittstelle 44 von der Zugmaschine 10 abzurufen. Die Recheneinheit 50 ist dazu eingerichtet, auf Grundlage der abgerufenen Positionsdaten und Informationen ein Steuerungssignal für das landwirtschaftliche Arbeitsgerät 12 zu erzeugen.

Das Erzeugen des Steuerungssignals erfolgt dabei auf Grundlage der Positionsdaten der Zugmaschine 10 und unter Berücksichtigung der Geschwindigkeit der Zugmaschine 10, technischen Informationen zu der Zugmaschine 10 und technischen Informationen zu dem landwirtschaftlichen Arbeitsgerät 12.

Das erzeugte Steuerungssignal wird dann der Lenkeinrichtung 34a, 34b bereitgestellt, sodass ein selbsttätiges Steuern der Lenkeinrichtung 34a, 34b des landwirtschaftlichen Arbeitsgeräts 12 umgesetzt wird. Das Steuern erfolgt dabei derart, dass das landwirtschaftliche Arbeitsgerät 12 in der Spur 36a, 36b der Zugmaschine 10 fährt.

### Bezugszeichenliste

- 10: Zugmaschine
- 12: landwirtschaftliches Arbeitsgerät
- 14: Vorderachse
- 16a, 16b: Vorderräder
- 18: Hinterachse
- 20a, 20b: Hinterräder
- 22: Maschinenrahmen
- 24: Kupplungseinrichtung
- 26: Kuppelpunkt
- 28: Kupplungseinrichtung
- 30: Achse
- 32a, 32b: Räder
- 34a, 34b: Lenkeinrichtung
- 36a, 36b: Spuren
- 38: Erfassungseinrichtung
- 40: Steuerungseinheit
- 42: Bus-Schnittstelle
- 44: Bus-Schnittstelle
- 46: Steuerungseinrichtung
- 48: Kommunikationsmodul
- 50: Recheneinheit

- R: Radius

## Patentansprüche

1. Verfahren zum Steuern eines von einer Zugmaschine (10) gezogenen landwirtschaftlichen Arbeitsgeräts (12), mit den Schritten:
- Erfassen von Positionsdaten der Zugmaschine (10) unter Verwendung eines Satellitensystems; und
- Bereitstellen der Positionsdaten der Zugmaschine (10) zum Abruf durch das landwirtschaftliche Arbeitsgerät (12);
**gekennzeichnet durch** die Schritte:
- Abrufen der Positionsdaten der Zugmaschine (10) durch das landwirtschaftliche Arbeitsgerät (12); und
- selbsttätiges Steuern des landwirtschaftlichen Arbeitsgeräts (12) auf Grundlage der abgerufenen Positionsdaten der Zugmaschine (10).

2. Verfahren nach Anspruch 1,
**dadurch gekennzeichnet, dass** das Erfassen der Positionsdaten der Zugmaschine (10) durch eine Erfassungseinrichtung (38) der Zugmaschine (10) erfolgt.

3. Verfahren nach Anspruch 1 oder 2,
**gekennzeichnet durch** zumindest einen der folgenden Schritte:
- Erfassen der Geschwindigkeit der Zugmaschine (10), insbesondere auf Grundlage der Positionsdaten der Zugmaschine (10);
- Erfassen der Geschwindigkeit des landwirtschaftlichen Arbeitsgeräts (12).

4. Verfahren nach einem der vorstehenden Ansprüche,
**gekennzeichnet durch** zumindest einen der folgenden Schritte:
- Abrufen von technischen Informationen zu der Zugmaschine (10);
- Abrufen von technischen Informationen zu dem landwirtschaftlichen Arbeitsgerät (12).

5. Verfahren nach einem der vorstehenden Ansprüche,
**dadurch gekennzeichnet, dass** das selbsttätige Steuern des landwirtschaftlichen Arbeitsgeräts (12) auf Grundlage der abgerufenen Positionsdaten der Zugmaschine (10) den folgenden Schritt umfasst:
- Erzeugen eines Steuerungssignals auf Grundlage der Positionsdaten der Zugmaschine (10), vorzugsweise unter Berücksichtigung der Geschwindigkeit der Zugmaschine (10), der Geschwindigkeit des landwirtschaftlichen Arbeitsgeräts (12), technischen Informationen zu der Zugmaschine (10) und/oder technischen Informationen zu dem landwirtschaftlichen Arbeitsgerät (12).

6. Verfahren nach einem der vorstehenden Ansprüche,
**dadurch gekennzeichnet, dass** das Bereitstellen der Positionsdaten der Zugmaschine (10) zum Abruf durch das landwirtschaftliche Arbeitsgerät (12) den folgenden Schritt umfasst:
- Bereitstellen der Positionsdaten der Zugmaschine (10) für eine Bus-Schnittstelle (42) der Zugmaschine (10).

7. Verfahren nach einem der vorstehenden Ansprüche,
**dadurch gekennzeichnet, dass** das Abrufen der Positionsdaten der Zugmaschine (10) durch das landwirtschaftliche Arbeitsgerät (12) kabelgebunden oder kabellos erfolgt.

8. Verfahren nach einem der vorstehenden Ansprüche,
**dadurch gekennzeichnet, dass** das selbsttätige Steuern des landwirtschaftlichen Arbeitsgeräts (12) auf Grundlage der abgerufenen Positionsdaten der Zugmaschine (10) den folgenden Schritt umfasst:
- selbsttätiges Steuern einer Lenkeinrichtung (34a, 34b) des landwirtschaftlichen Arbeitsgeräts (12), insbesondere derart, dass das landwirtschaftliche Arbeitsgerät (12) in der Spur (36a, 36b) der Zugmaschine (10) fährt.

9. Steuerungseinrichtung (46) für ein landwirtschaftliches Arbeitsgerät (12), mit
- einem Kommunikationsmodul (48), und
- einer signalleitend mit dem Kommunikationsmodul (48) verbundenen Recheneinheit (50);
**dadurch gekennzeichnet, dass** das Kommunikationsmodul (48) dazu eingerichtet ist, Positionsdaten der Zugmaschine (10) von der Zugmaschine (10) abzurufen, und die Recheneinheit (50) dazu eingerichtet ist, auf Grundlage der abgerufenen Positionsdaten der Zugmaschine (10) ein Steuerungssignal für das landwirtschaftliche Arbeitsgerät (12) zu erzeugen.

10. Steuerungseinrichtung (46) nach Anspruch 9,
**dadurch gekennzeichnet, dass** die Steuerungseinrichtung (46) dazu eingerichtet ist, in einem Verfahren zum Steuern eines von einer Zugmaschine (10) gezogenen landwirtschaftlichen Arbeitsgeräts (12) nach einem der Ansprüche 1 bis 8 verwendet zu werden.

11. Landwirtschaftliches Arbeitsgerät (12), mit
- einer Steuerungseinrichtung (46),
**dadurch gekennzeichnet, dass** die Steuerungseinrichtung (46) nach einem der Ansprüche 9 oder 10 ausgebildet ist.
